# EUROPEAN PATENT SPECIFICATION

(11) **EP 2 713 501 B1**
(45) Date of publication and mention of the grant of the patent: **28.02.2024**
(21) Application number: 13180075.7
(22) Date of filing: 12.08.2013
(51) Int. Cl.: H02P 21/00, H02P 27/08, H02P 23/28, H02P 29/50

(54) **A MOTOR DRIVING SYSTEM AND A MOTOR VEHICLE**
EIN ANTRIEBSSYSTEM FÜR EINEN ELEKTROMOTOR UND EIN FAHRZEUG MIT ELEKTROMOTOR
UN SYSTÈME D'ENTRAÎNEMENT DE MOTEUR ÉLECTRIQUE ET UN VÉHICULE AVEC MOTEUR ÉLECTRIQUE

(30) Priority: 28.09.2012 JP 2012215446
(43) Date of publication of application: 02.04.2014
(73) Proprietor: Hitachi, Ltd., Tokyo 100-8280 (JP)
(72) Inventor: Sakai, Toshifumi, Chiyoda-ku, Tokyo 100-8280 (JP); Iwaji, Yoshitaka, Chiyoda-ku, Tokyo 100-8280 (JP); Kojima, Tetsuo, Chiyoda-ku, Tokyo 100-8280 (JP)
(74) Representative: Mewburn Ellis LLP

(56) References cited:
- EP-A2- 0 886 369
- EP-A2- 2 287 032

## Description

The present invention relates to a driving system of an AC motor, and particularly to a control method and a driving system capable of realizing a PWM waveform which is very suitable to reduce motor loss occurring when the motor is variably driven by a power conversion device.

Generally, in order to perform variable speed driving of an AC motor (hereinafter, referred to as a motor), a power conversion device (hereinafter, referred to as an inverter device) which converts DC power into any frequency and a voltage is used. The inverter device includes a main circuit using a semiconductor switching element and a controller which controls the switching element, performs pulse width modulation control (hereinafter, referred to as PWM control) on the switching element at any carrier frequency so as to control a voltage applied to the motor and a frequency thereof, thereby performing variable speed driving of the motor.

However, when variable speed driving of the motor is performed by the inverter device, there are cases where a loss occurring in a stator or a rotor core and conductor of the motor increases due to carrier harmonics of the PWM control, and thus motor efficiency is reduced. Although it is known that the loss which occurs in the motor due to the carrier harmonics decreases with an increase in carrier frequency, the increase in the carrier frequency in the PWM control in the related art leads to an increase in switching loss of the inverter device, and thus the carrier frequency cannot be sufficiently increased in most cases.

For this reason, in a motor driving system using the inverter device, there is a necessity of developing a control technique for reducing a switching loss of the inverter device and reducing inverter loss and motor loss by suppressing harmonics of a motor current.

In relation to a method for reducing a switching loss of the inverter device, a two-phase modulation method is widely known as a method for reducing a switching loss of a three-phase inverter. The two-phase modulation method is a method in which two phases among three phases undergo switching control, while the other phase is not switched, and can reduce a switching loss since the number of switchings is reduced to 2/3 as compared with a sinusoidal PWM method. For example, as disclosed in JP-A-6-233546, there is a PWM control method using a two-arm modulation scheme in which control is performed such that the inverter loss becomes minimal according to a load ratio of an inverter device.

In addition, there are techniques disclosed in JP-A-2004-80975 and JP-A-2011-35991 in relation to a method for suppressing current pulsation of a motor.

In the technique disclosed in JP-A-2004-80975, a 3n-th order harmonic current with a driving frequency, included in a driving current for driving a motor, is detected, and a target voltage is corrected so as to cancel out the harmonic current, thereby reducing motor loss due to the harmonic current. In addition, in the technique disclosed in JP-A-2011-35991, a specific low order harmonic is intentionally superimposed on a fundamental wave signal of a voltage so as to remove or reduce torque pulsation of a specific frequency without reducing the number of switchings.

In addition, there is a technique which has been granted a patent in Japanese Patent No. 4422567 as a technique in which a specific harmonic is superimposed on a fundamental wave voltage in this technical field. This patent publication discloses that a motor driving device controls a waveform such that a high odd order harmonic is superimposed on a sinusoidal wave which becomes a fundamental wave of a modulation wave modulated by a PWM carrier, and continuously varies a superimposition ratio of the high order harmonic depending on a voltage of a battery and an output voltage of an inverter.

In the technique disclosed in JP-A-6-233546, each saturation section for designating saturation of each phase arm output voltage is moved and corrected by the same angle according to a power-factor angle formed by an output voltage and an output current of the inverter in the PWM control using a two-arm modulation scheme. However, the two-phase modulation scheme can reduce a switching loss of the inverter device but does not necessarily achieve an effect of reducing motor loss. On the contrary, there is concern that a motor current may be distorted and thus motor loss may increase.

In the technique disclosed in JP-A-2004-80975, since, in a three-phase six-line type motor or the like, the 3n-th order harmonics (harmonics which are multiples of 3n of a frequency of a motor driving current) are not canceled out from a driving current of the motor by the PWM control in the related art, the 3n-th order harmonic currents are detected, and a target voltage is corrected so as to cancel out the harmonic current, thereby reducing motor loss due to the harmonic current. However, the disclosed method is a scheme for reducing harmonic current caused by a motor structure, and for not reducing motor loss caused by carrier harmonics in the PWM control in the related art. Further, in order to output a voltage for canceling out the detected frequency component of the harmonic current, the number of switchings of the inverter is required to increase in proportion, and thus there is concern that inverter loss may increase. In addition, there is a problem in that a high-performance current sensor is required to be used in order to detect harmonic current.

In the technique disclosed in JP-A-2011-35991, as a method for reducing the number of switchings and suppressing current pulsation, a harmonic component is intentionally superimposed on a fundamental wave signal of a voltage so as to remove or reduce torque pulsation of a specific frequency. However, in the disclosed method, it is known that a specific low order harmonic can be removed or reduced, but currents of harmonics other than the removed or reduced order harmonic increase. For this reason, there are cases where removal of or reduction in a specific low order harmonic does not necessarily lead to reduction in motor loss. In addition, although the number of switchings is required to decrease in order to reduce a switching loss, if the number of switchings decreases, current pulsation increases, and thus there is concern that a problem may occur in which pulsatory torque or noise of the motor increases. Therefore, the method cannot be allowed much.

In the technique disclosed in Japanese Patent No. 4422567, a waveform is controlled such that a high odd order harmonic is superimposed on a sinusoidal wave which becomes a fundamental wave of a modulation wave modulated by a PWM carrier, and a superimposition ratio of the high order harmonic is continuously varied depending on a voltage of a battery and an output voltage of an inverter. However, the disclosed method is a scheme aiming at improvement in a voltage use rate and continuous torque control up to a high rotation and high torque region in the motor driving system using the PWM inverter, and a harmonic voltage which is very suitable to reduced motor loss when the PWM control is performed, is not superimposed.

EP0886369 discloses a method of controlling a pulse width modulation or PWM inverter apparatus that generates and controls AC output voltages with PWM control, which comprises the steps of: generating a reference voltage vector for setting the AC output voltages; and changing the timing of generation of the AC output voltages during a predetermined period of time determined by a carrier signal at predetermined intervals determined by the carrier signal without changing the pulse widths of the AC output voltages determined by the PWM control so that a vector representing the averages of instantaneous amplitudes of the AC output voltages for a predetermined period of time agrees with the reference voltages vector, and so that the spectra of high-frequency components of each of the AC output voltages are spread out over a predetermined wide range of frequencies.

EP2287032 discloses a power conversion device that comprises a power conversion unit of a three phase full bridge type including upper arm switching devices and lower arm switching devices, and a controller that outputs drive signals to these switching devices. This power conversion device forms alternately a first interval in which the upper arm switching devices and the lower arm switching devices are switched to ON for different phases, and a second interval in which, for all phases, either the upper arm switching devices or the lower arm switching devices are switched to ON, according to electrical angle.

In light of the above-described problems, a preferred aim of the present invention is to provide a motor driving system, a power conversion device, and a control method of a motor, capable of reducing motor loss without increasing a switching loss of an inverter device in the motor driving system using the inverter device.

According to a first aspect of the present invention for solving the problems, there is provided a motor driving system according to claim 1.

The motor driving system may optionally be as specified in any one of claims 2 to 6.

**According** to a second aspect of the present invention for solving the problems, there is provided a motor vehicle as specified in claim 7.

According to the present invention, it is possible to reduce motor loss caused by PWM control without increasing a switching loss of an inverter device.

### IN THE DRAWINGS

Fig. 1 shows an example of an overall control block diagram of a motor driving system according to a first embodiment of the present invention.
Fig. 2 is a diagram illustrating an example of a frequency distribution of harmonic voltage components when PWM control in the related art is performed.
Fig. 3 shows an example of a functional block diagram of a carrier harmonic control unit according to the first embodiment of the present invention.
Fig. 4 is a diagram illustrating an example of a relationship between a modulation ratio and a ratio of harmonic current components around a PWM carrier frequency when the PWM control in the related art is performed.
Fig. 5 is a diagram illustrating an example of a relationship between a modulation ratio and a ratio of harmonic current components around a PWM carrier frequency in the first embodiment of the present invention.
Fig. 6 shows an example of an overall control block diagram of a motor driving system according to a second embodiment of the present invention.
Fig. 7 shows an example of a functional block diagram of a harmonic voltage generator according to the second embodiment of the present invention.
Fig. 8 is a diagram illustrating an example of a relationship between a setting value of a proportional coefficient Ku and motor loss in the second embodiment of the present invention.
Fig. 9 shows an example of a functional block diagram of a harmonic voltage generator according to a third embodiment of the present invention.
Fig. 10 shows an example of an overall control block diagram of a motor driving system according to a fourth embodiment of the present invention.
Fig. 11 shows an example of a functional block diagram of a harmonic voltage generator according to the fourth embodiment of the present invention.
Fig. 12 shows an example of a functional block diagram of a harmonic voltage generator according to a fifth embodiment of the present invention.
Fig. 13 shows an example of an overall control block diagram of a motor driving system according to a sixth embodiment of the present invention.
Fig. 14 is a diagram illustrating an example of a relationship between a setting value of a proportional coefficient Ku and motor loss in a different working state of an AC motor driving system.
Fig. 15 shows an example of an overall control block diagram of a motor driving system according to a seventh embodiment of the present invention.
Fig. 16 shows an example of an overall control block diagram of a motor driving system according to an eighth embodiment of the present invention.
Fig. 17 shows an example of an overall control block diagram of a motor driving system according to a ninth embodiment of the present invention.
Fig. 18 shows an example of an overall control block diagram of a motor driving system according to a tenth embodiment of the present invention.
Fig. 19 shows an example of an overall control block diagram of a motor driving system according to an eleventh embodiment of the present invention.
Fig. 20 shows an example of a functional block diagram of a loss estimation operator according to the eleventh embodiment of the present invention.
Fig. 21 is a diagram illustrating an example of a relationship between an evaluation function H and a harmonic loss in the eleventh embodiment of the present invention.
Fig. 22 shows an example of a functional block diagram of the loss estimation operator according to the eleventh embodiment of the present invention.
Fig. 23 shows an example of an overall control block diagram of a motor driving system according to a twelfth embodiment of the present invention.

Hereinafter, embodiments of the present invention will be described in detail with reference to the drawings. In addition, in all the drawings, the same constituent element is given the same reference numeral in principle. Further, a description of portions having the same function will be omitted.

### First Embodiment

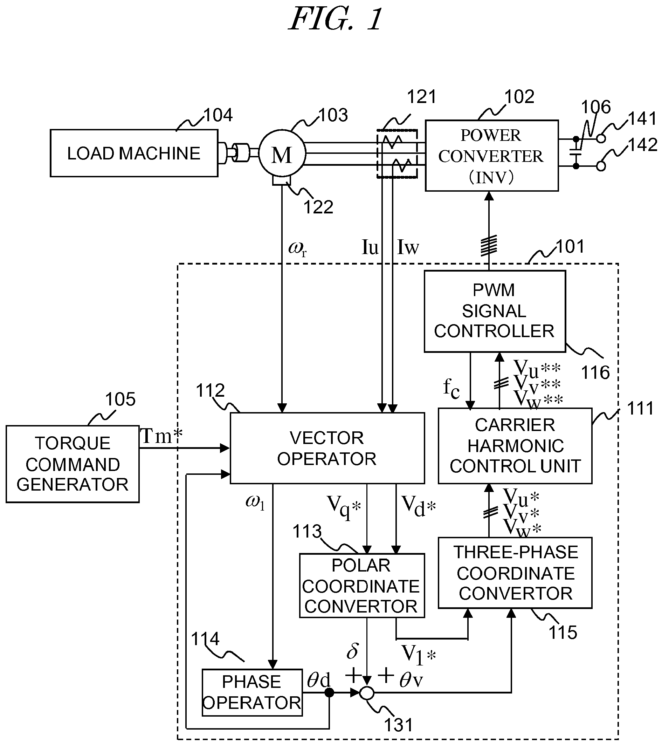

Fig. 1 is a configuration diagram of an AC motor driving system according to the first embodiment of the present invention. This system includes an AC motor 103 which is a control target, a load machine 104 connected to the AC motor 103, a power converter 102 which drives the AC motor 103, and a control device 101 which controls the power converter 102. As a feature of the first embodiment, the control device 101 includes a carrier harmonic control unit 111 for reducing motor loss due to a carrier harmonic when PWM control is performed. The carrier harmonic control unit 111 controls the power converter 102 so as to disperse carrier harmonic components of a PWM voltage waveform around a carrier frequency, thereby reducing a harmonic current and thus reducing motor loss.

The configuration diagram of Fig. 1 will be described more in detail. In Fig. 1, the power converter 102 is controlled by the control device 101 on the basis of AC current detection values Iu and Iw detected by a current detection unit 121 and a rotation electric angular frequency ωr of the AC motor 103 detected by a rotation speed detection unit 122. In addition, the current detection unit 121 of Fig. 1 detects an AC current through two-phase detection, but may perform three-phase detection. Further, an AC current value may be used which is estimated from a value of a current flowing through a DC resistor which is installed for protecting the power converter 102 from overcurrent, without using a phase current sensor. Furthermore, there may be a speed-sensorless and position-sensorless configuration in which the rotation electric angular frequency ωr of the AC motor 103 detected by the rotation speed detection unit 122 of the AC motor of Fig. 1 is not used. A torque command generator 105 is a controller which issues a torque command Tm* to the AC motor and is a higher rank device of the control device 101. The control device 101 controls a generated torque of the AC motor 103 on the basis of the torque command Tm* from the torque command generator 105. In the control device 101, a vector operator 112 divides the AC current detection values Iu and Iw which are AC current detection values of the AC motor 103 into a torque current component (a q-axis current component) and an excitation current component (a d-axis current component) on the basis of a control phase θd, and performs each current control. As a result of current control, voltage commands Vd* and Vq* on dq axes which are rotation coordinate axes are operated, and are respectively converted into a voltage amplitude command V1* and a voltage phase command δ in a polar coordinate converter 113. In addition, a driving frequency ω1 of the AC motor is also operated in the vector operator 112 and is output to a phase operator 114. The control phase θd is operated by the phase operator 114 by using the driving frequency ω1 of the AC motor as an input. Further, an adder 131 adds the voltage phase command δ to the control phase θd so as to output a voltage phase θv. The voltage amplitude command V1* is converted into three-phase AC voltage commands Vu*, Vv* and Vw* on the basis of the voltage phase θv in a three-phase coordinate converter 115. The carrier harmonic control unit 111 receives the three-phase AC voltage commands Vu*, Vv* and Vw*, and outputs three-phase voltage commands Vu**, Vv** and Vw** for dispersing the carrier harmonic component of the PWM voltage waveform around the carrier frequency. The voltage commands Vu**, Vv** and Vw** are converted into a PWM pulse signal for driving the power converter 102 by a pulse width modulation (PWM) signal controller 116. The PWM signal controller 116 generates a triangular wave from a phase θfc of any carrier wave, and compares the size thereof with the size of each of the three-phase AC voltage commands Vu**, Vv** and Vw** so as to perform pulse width modulation. In addition, the driving system has a configuration of a general AC motor driving system through PWM control except for the carrier harmonic control unit 111.

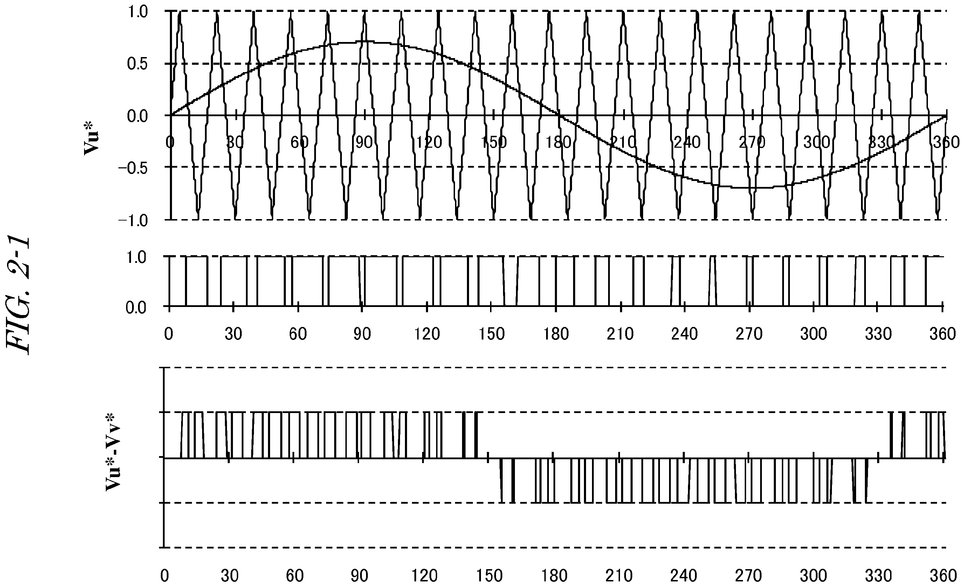

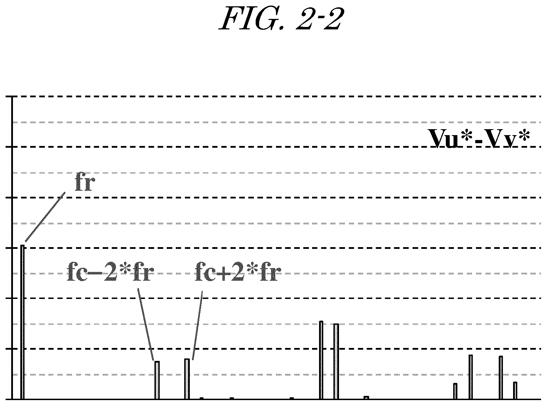

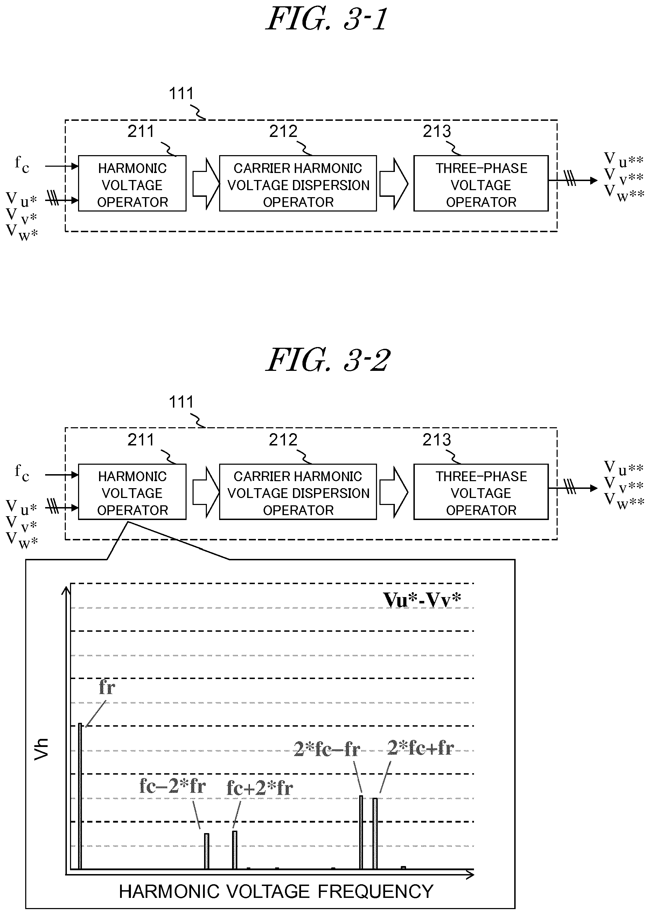

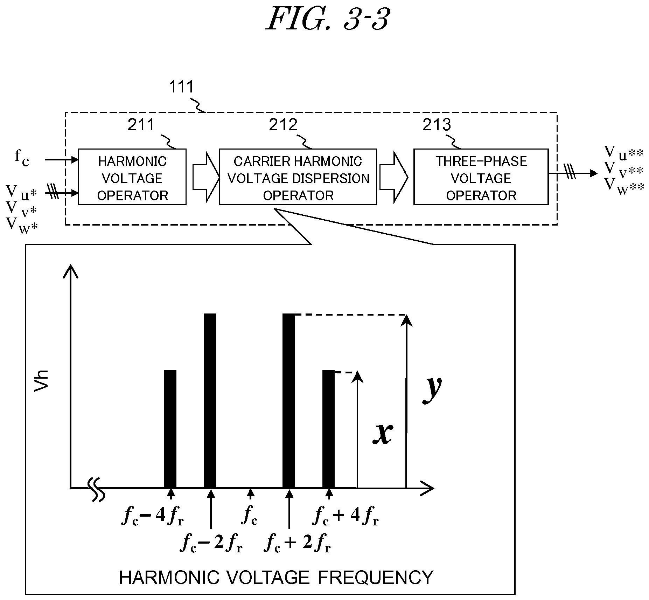

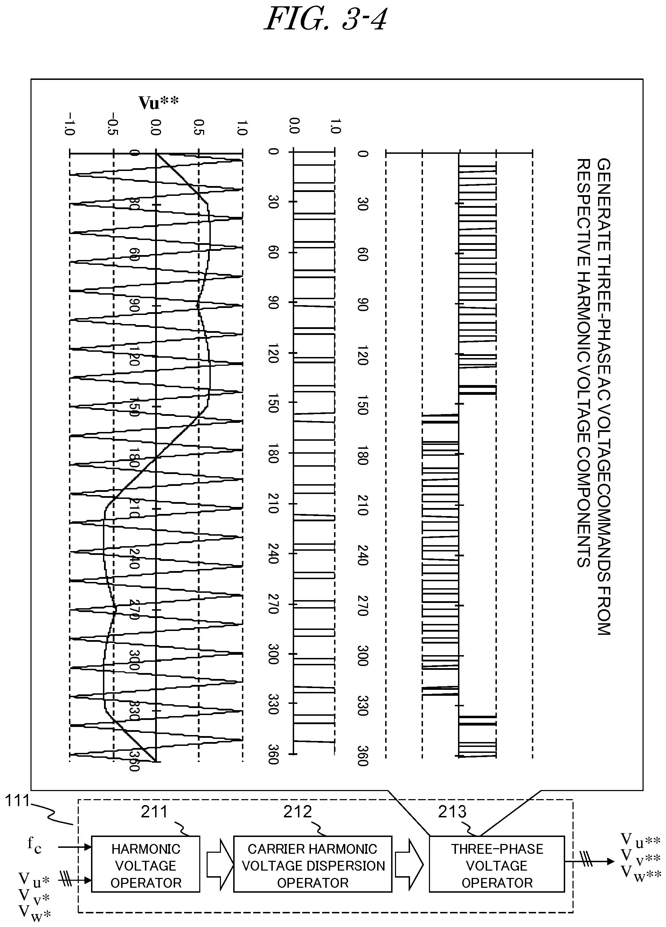

Next, a motor loss reducing means according to the present embodiment will be described with reference to Figs. 2 and 3.

The first embodiment relates to a voltage waveform generation method of receiving the three-phase AC voltage commands Vu*, Vv* and Vw* and generating the three-phase AC voltage commands Vu**, Vv** and Vw** which are very suitable for reducing motor loss due to carrier harmonics during PWM control in the carrier harmonic control unit 111, and relates to a waveform generation method of generating, as an inverter voltage waveform, a PWM waveform for dispersing a frequency distribution of the harmonic components around the carrier frequency in relation to the harmonic components of the PWM waveform generated from the carrier frequency and a fundamental wave voltage command.

Fig. 2 shows a frequency distribution of harmonic voltage components when PWM control in the related art is performed. In Fig. 2, in relation to the harmonic voltage components, it can be seen that, when a driving frequency of the AC motor is fr, and a PWM carrier frequency is fc, the harmonic voltage components greatly occur at (fc - 2·fr) and (fc + 2·fr) around the carrier frequency fc.

Fig. 3 is a block configuration diagram of the carrier harmonic control unit 111 according to the first embodiment of the present invention. The carrier harmonic control unit 111 includes a harmonic voltage operator 211, a carrier harmonic voltage dispersion operator 212, and a three-phase voltage operator 213. The harmonic voltage operator 211 operates a voltage component of the driving frequency fr, and harmonic voltage components of (fc + 2-fr), (fc - 2-fr), (2-fc + fr), and (2·fc - fr) which are main harmonic voltage components during PWM control, from the carrier frequency fc and the three-phase AC voltage commands Vu*, Vv* and Vw* which are output from the PWM signal controller 116. In addition, the carrier harmonic voltage dispersion operator 212 operates a PWM waveform in which the harmonic voltage component of (fc + 2·fr) or (fc - 2·fr) is dispersed to (fc + 4·fr) or (fc - 4·fr) . Further, the PWM waveform is set such that the voltage components operated in the harmonic voltage operator 211 does not change as much as possible in relation to the voltage component of the driving frequency fr and the harmonic voltage components of (2·fc + fr) and (2·fc - fr) . Furthermore, the three-phase voltage operator 213 operates the three-phase AC voltage commands Vu**, Vv** and Vw** from the PWM waveform including the voltage component of the driving frequency fr and the respective harmonic voltage components of (fc + 2·fr), (fc - 2·fr), (fc + 4·fr), (fc - 4·fr), (2·fc + fr), and (2·fc - fr) which are operated by the carrier harmonic voltage dispersion operator 212.

As described above, according to the present embodiment, the three-phase AC voltage commands in which the carrier harmonic components (fc + 2-fr) and (fc - 2·fr) of the PWM voltage waveform are dispersed around the carrier frequencies (fc + 4·fr) and (fc - 4·fr) is generated, and thus it is possible to reduce harmonic voltage components included in a motor current during the PWM control and to thereby reduce motor loss.

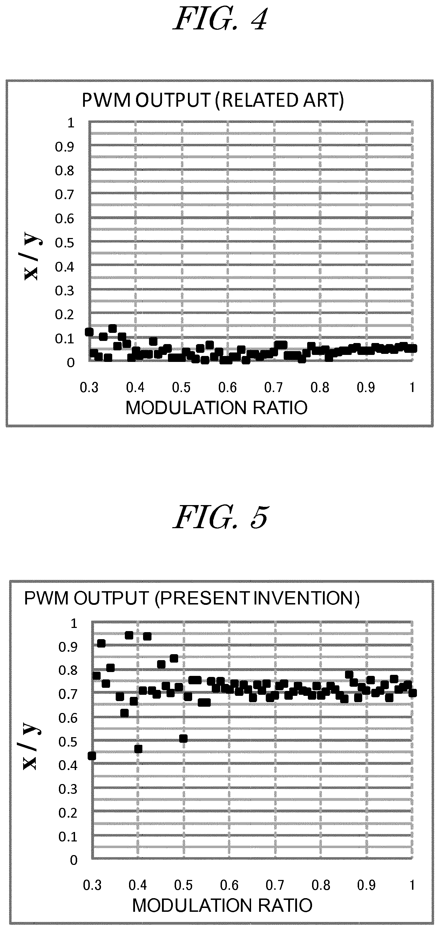

In addition, Fig. 4 shows a graph in which a ratio x/y of a harmonic voltage component x of (fc + 4-fr) or (fc - 4-fr) and a harmonic voltage component y of (fc + 2-fr) or (fc - 2-fr) is plotted in the longitudinal axis, and a modulation ratio of the PWM voltage waveform is plotted in the transverse axis, in a PWM voltage waveform in the related art. In the figure, the ratio x/y of the harmonic voltage components is less than 0.2, and thus it can be seen that the harmonic voltage component y of (fc + 2·fr) or (fc - 2·fr) is great.

In contrast, Fig. 5 shows a graph in which a ratio x/y of a harmonic voltage component x of (fc + 4·fr) or (fc - 4·fr) and a harmonic voltage component y of (fc + 2-fr) or (fc - 2-fr) is plotted in the longitudinal axis, and a modulation ratio of the PWM voltage waveform is plotted in the transverse axis, in a PWM voltage waveform according to the first embodiment.
It can be seen that the ratio x/y of the harmonic voltage components is 0.4 or more.

As described above, according to the present embodiment, it is possible to realize a PWM voltage waveform in which the ratio x/y of the harmonic voltage component x of (fc + 4·fr) or (fc - 4·fr) and the harmonic voltage component y of (fc + 2-fr) or (fc - 2-fr) is 0.4 or more, and to thereby reduce motor loss due to carrier harmonics.

### Second Embodiment

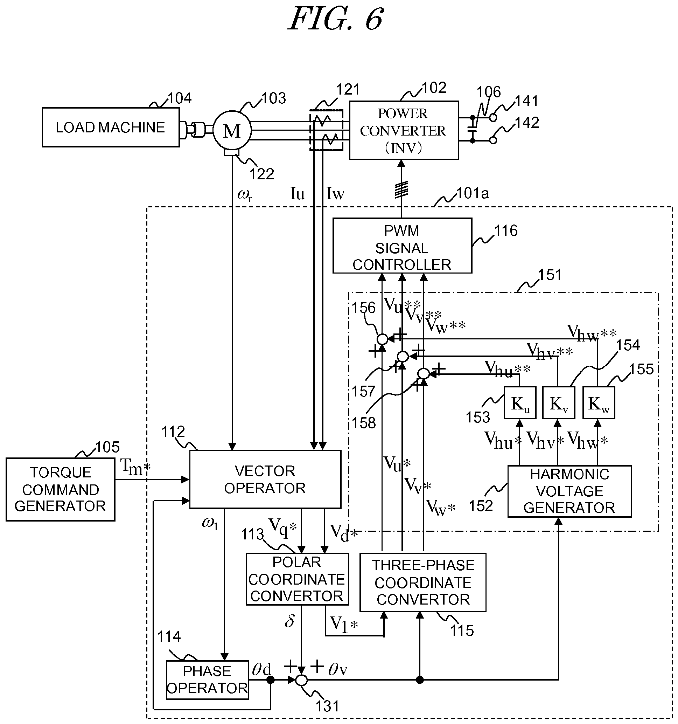

Next, with reference to Figs. 6, 7 and 8, the second embodiment of the present invention will be described.

In the first embodiment, the AC motor driving system which disperses harmonic components around the carrier frequency fc has been described. In contrast, the second embodiment is aimed at reducing motor loss by adding a voltage component different from the fundamental wave voltage command to a voltage command and by appropriately setting an addition amount of the different voltage component.

Fig. 6 is a configuration diagram of an AC motor driving system according to the second embodiment of the present invention. Only different configuration portions will be described as compared with the first embodiment shown in Fig. 1. In Fig. 6, this motor loss reducing means 151 is used instead of the carrier harmonic control unit 111 of Fig. 1, thereby realizing the second embodiment.

The motor loss reducing means 151 receives the three-phase AC voltage commands Vu*, Vv* and Vw* and the voltage phase θv, and generates and outputs the three-phase AC voltage commands Vu**, Vv** and Vw** which are very suitable to reduce motor loss to the PWM signal controller 116. The motor loss reducing means 151 includes a harmonic voltage generator 152, an amplitude adjuster 153 of a U phase added harmonic voltage component Vhu*, an amplitude adjuster 154 of a V phase added harmonic voltage component Vhv*, an amplitude adjuster 155 of a W phase added harmonic voltage component Vhw*, an adder 156, an adder 157, and an adder 158.

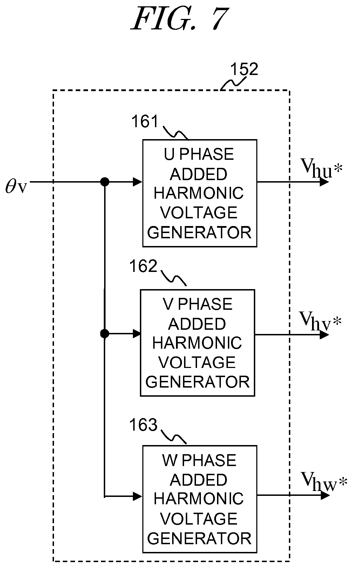

Fig. 7 is a block configuration diagram of the harmonic voltage generator 152. The harmonic voltage generator 152 includes a U phase added harmonic voltage generator 161, a V phase added harmonic voltage generator 162, and a W phase added harmonic voltage generator 163. The harmonic voltage generator 152 outputs the voltage components Vhu*, Vhv* and Vhw* of frequencies which are any integer multiples of the frequencies of the three-phase AC voltage commands Vu*, Vv* and Vw*, based on the voltage phase θv, in synchronization with the three-phase AC voltage commands. If the harmonic voltage components Vhu*, Vhv* and Vhw* are not respectively synchronized with the three-phase AC voltage commands Vu*, Vv* and Vw*, there is a possibility that a ratio of containing a specific harmonic may increase, and thus it is not much desirable.

In addition, in the amplitude adjuster 153 of the U phase added harmonic voltage, the amplitude adjuster 154 of the V phase added harmonic voltage, and the amplitude adjuster 155 of the W phase added harmonic voltage, the voltages components Vhu*, Vhv* and Vhw* are respectively multiplied by Ku, Kv and Kw, and thereby AC voltage components Vhu**, Vhv** and Vhw** are output. In addition, the adder 156 adds the voltage component Vhu** different from the fundamental wave voltage command to the U phase AC voltage command Vu* so as to output a U phase AC voltage command Vu**. Further, the adder 157 adds the voltage component Vhv** different from the fundamental wave voltage command to the V phase AC voltage command Vv* so as to output a V phase AC voltage command Vv**. The adder 158 adds the voltage component Vhw** different from the fundamental wave voltage command to the W phase AC voltage command Vw*so as to output a W phase AC voltage command Vw**.

Next, an operation according to the present embodiment will be described.

In the second embodiment, as shown in Fig. 6, those obtained by adding the harmonic voltage components Vhu**, Vhv** and Vhw** for reducing motor loss to the three-phase AC voltage commands Vu*, Vv* and Vw* which have the voltage amplitude command V1* obtained through the vector operation as amplitude, are output to the PWM signal controller 116. In addition, by changing setting values of the respective proportional coefficients Ku, Kv and Kw of the amplitude adjuster 153 of the U phase added harmonic voltage, the amplitude adjuster 154 of the V phase added harmonic voltage, and the amplitude adjuster 155 of the W phase added harmonic voltage, voltage amplitudes of the harmonic voltage components Vhu**, Vhv** and Vhw** added to the three-phase AC commands can be changed. At this time, the harmonic voltage components Vhu**, Vhv** and Vhw** are preferably voltage waveforms which have the same amplitude, the same frequency and of which three phases are symmetrical, from the viewpoint of symmetry of waveforms. In addition, since the harmonic voltage components Vhu**, Vhv** and Vhw** have frequencies which are any integer multiples of frequencies of the three-phase AC voltage commands Vu*, Vv* and Vw* in synchronization with the respective phases of the three-phase AC voltage commands on the basis of the voltage phase θv, it is possible to remove or reduce a specific harmonic component.

In addition, although the harmonic voltage components Vhu*, Vhv* and Vhw* which are respectively synchronized with the phases of the three-phase AC voltage commands Vu*, Vv* and Vw* are operated based on the voltage phase θv in the present embodiment, harmonic voltages synchronized with respective voltage phases may be operated from the three-phase AC voltage commands Vu*, Vv* and Vw*. For example, the maximum value and the minimum value of instantaneous voltage command values of the three-phase AC voltage commands Vu*, Vv* and Vw* are obtained, and those obtained by adding a half of the sum thereof to the three-phase AC voltage commands may be used as the harmonic voltage components Vhu*, Vhv* and Vhw*.

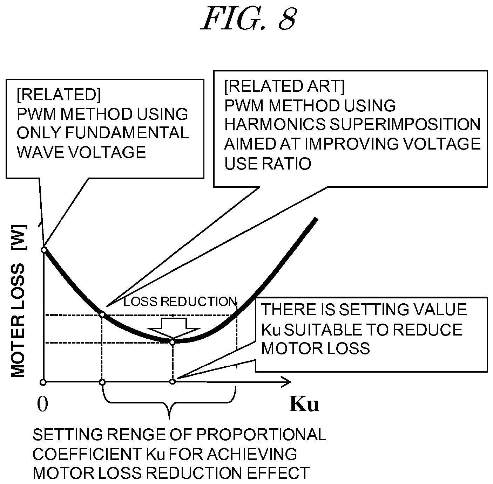

Fig. 8 is a graph illustrating a relationship with motor loss by using a setting value of the proportional coefficient Ku as a parameter when the AC motor is driven at any rotation frequency in the PWM control according to the second embodiment of the present invention. It is confirmed from a test using a practical machine that the motor loss varies depending on a value of the proportional coefficient Ku. In addition, there is a Ku setting value capable of maximizing an effect of reducing the motor loss. Further, there is a K setting value capable of minimizing the motor loss in a case of changing setting values of the proportional coefficients Kv and Kw. As above, it is possible to realize a PWM waveform for reducing motor loss by setting the proportional coefficients Ku, Kv and Kw capable of achieving the motor loss reduction effect through addition of harmonic voltages.

As described above, according to the present embodiment, it is possible to reduce motor loss by adding a voltage component different from the fundamental wave voltage command to a voltage command and by appropriately setting an addition amount of the different voltage component.

### Third Embodiment

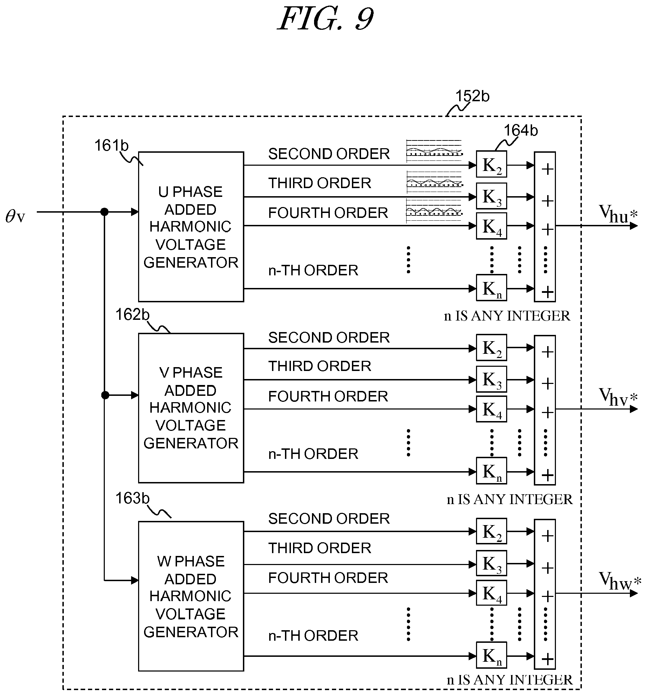

Next, the third embodiment of the present invention will be described with reference to Fig. 9.

Fig. 9 is a block configuration diagram of a harmonic voltage generator 152b according to the third embodiment of the present invention. Only different configuration portions will be described as compared with the second embodiment shown in Fig. 6. In Fig. 9, this harmonic voltage generator 152b is used instead of the harmonic voltage generator 152 of Fig. 6, thereby realizing the third embodiment.

In Fig. 9, the harmonic voltage generator 152b includes a U phase added harmonic voltage generator 161b, a V phase added harmonic voltage generator 162b, a W phase added harmonic voltage generator 163b, and a proportional coefficient multiplier 164b. The U phase added harmonic voltage generator 161b outputs n voltage components of frequencies which are any integer multiples of a frequency of the U phase AC voltage command Vu* in synchronization with the U phase AC voltage command Vu* on the basis of the voltage phase θv. In addition, n is any number. These n voltage components of the different frequencies are respectively multiplied by any proportional coefficients K2, K3, K4, ..., and Kn, and a sum total thereof is output as the U phase added harmonic voltage component Vhu* . This operation is also the same for the V phase added harmonic voltage component Vhv* and the W phase added harmonic voltage components Vhw*. In addition, the proportional coefficients K2, K3, K4, ..., and Kn (where n is an integer) of the proportional coefficient multiplier 164b of Fig. 9 are used to generate the U phase added harmonic voltage component Vhu* as harmonic voltage waveforms with any shape such as, for example, a square wave or a triangular wave other than the sinusoidal wave, and amplitude setting of Vhu** for reducing motor loss is performed in the amplitude adjuster 153 of the U phase added harmonic voltage in the same manner as the second embodiment.

As described above, according to the present embodiment, a plurality of voltages with different frequencies are generated using harmonic voltages of frequencies which are any integer multiples of the AC voltage command frequency, and addition amounts of the voltage components are appropriately set and are added to the three-phase AC voltage commands Vu*, Vv* and Vw*, thereby realizing a PWM waveform capable of further reducing motor loss than in the second embodiment.

### Fourth Embodiment

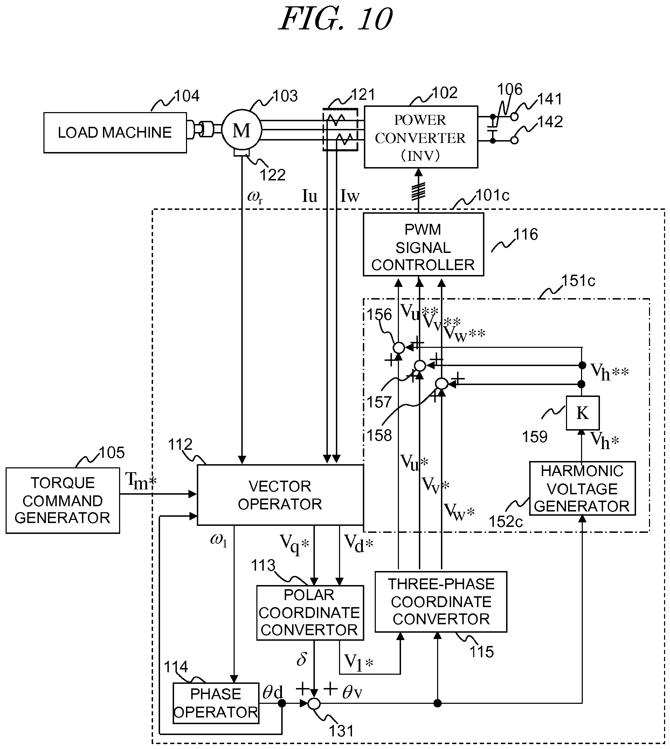

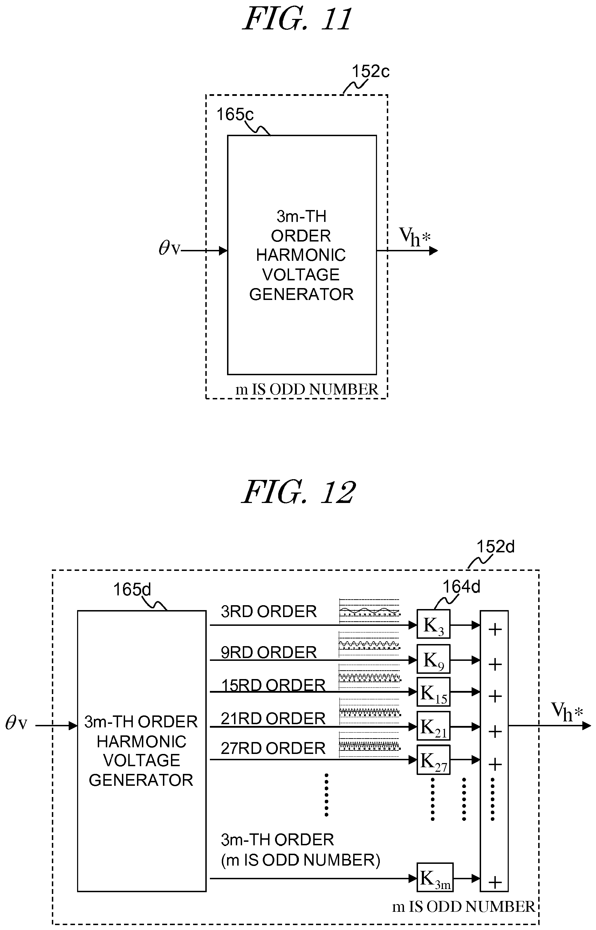

Next, with reference to Figs. 10 and 11, the fourth embodiment of the present invention will be described.

Fig. 10 is a configuration diagram of an AC motor driving system according to the fourth embodiment of the present invention. Only different configuration portions will be described as compared with the second embodiment shown in Fig. 6. In Fig. 10, a motor loss reducing means 151b is used instead of the motor loss reducing means 151 of Fig. 6, thereby realizing the fourth embodiment.

In the second embodiment, the AC motor driving system has been described which generates the harmonic voltage components Vhu**, Vhv** and Vhw** which are respectively synchronized with the three-phase AC voltage commands Vu*, Vv* and Vw* with the voltage amplitude command V1* obtained through the vector operation as amplitude, and can reduce motor loss by using addition amounts thereof.

In contrast, in the fourth embodiment, as shown in Fig. 11, voltage components different from the fundamental wave voltage, added to the three-phase AC voltage commands Vu*, Vv* and Vw*, are set to frequencies which are multiples of 3 and odd multiples of the fundamental wave voltage frequency in synchronization with the fundamental wave voltage, and thereby the voltage components different from the fundamental wave voltage, added to the three-phase AC voltage commands Vu*, Vv* and Vw*, can use the same voltage waveform.

As described above, according to the present embodiment, voltage components different from the fundamental wave voltage are set to frequencies which are multiples of 3 and odd multiples of the fundamental wave voltage frequency, and thereby the same voltage waveform can be used for the harmonic voltages which are respectively added to the three-phase AC voltage commands Vu*, Vv* and Vw*. Therefore, it is possible to realize a PWM waveform for reducing motor loss with a simpler control configuration than in the second embodiment.

### Fifth Embodiment

Next, the fifth embodiment of the present invention will be described with reference to Fig. 12.

Fig. 12 is a block configuration diagram of a harmonic voltage generator 152d according to the fifth embodiment of the present invention. Only different configuration portions will be described as compared with the fourth embodiment shown in Fig. 10. In Fig. 10, the harmonic voltage generator 152d of Fig. 12 is used instead of a harmonic voltage generator 152c of Fig. 11, thereby realizing the fifth embodiment.

In Fig. 12, the harmonic voltage generator 152d includes a 3m-th order harmonic voltage generator 165d, and a proportional coefficient multiplier 164d. The 3m-th order harmonic voltage generator 165d outputs n voltage components of frequencies which are multiples of 3 and odd multiples of a frequency of the voltage command Vu* in synchronization with the U phase AC voltage command Vu* on the basis of the voltage phase θv. In addition, n is any number. These n voltage components of the different frequencies are respectively multiplied by any n proportional coefficients K3, K9, K15, ..., and K3m (where m is an odd number), and a sum total thereof is output as a three-phase AC voltage command added harmonic voltage component Vh*. In addition, by setting the n proportional coefficients K3, K9, K15, ..., and K3m (where m is an odd number) of the proportional coefficient multiplier 164d of Fig. 12, the three-phase AC voltage command added harmonic voltage component Vh* can generate any third order harmonic voltage component.

As described above, according to the present embodiment, a plurality of harmonic voltages with different frequencies are generated using harmonic voltages of frequencies which are multiples of 3 and odd multiples of the fundamental wave voltage frequencies of the three-phase AC voltage commands Vu*, Vv* and Vw*, and addition amounts of the voltage component Vh* are appropriately set and are added to the three-phase AC voltage commands Vu*, Vv* and Vw*, thereby realizing a PWM waveform capable of further reducing motor loss than in the fourth embodiment.

### Sixth Embodiment

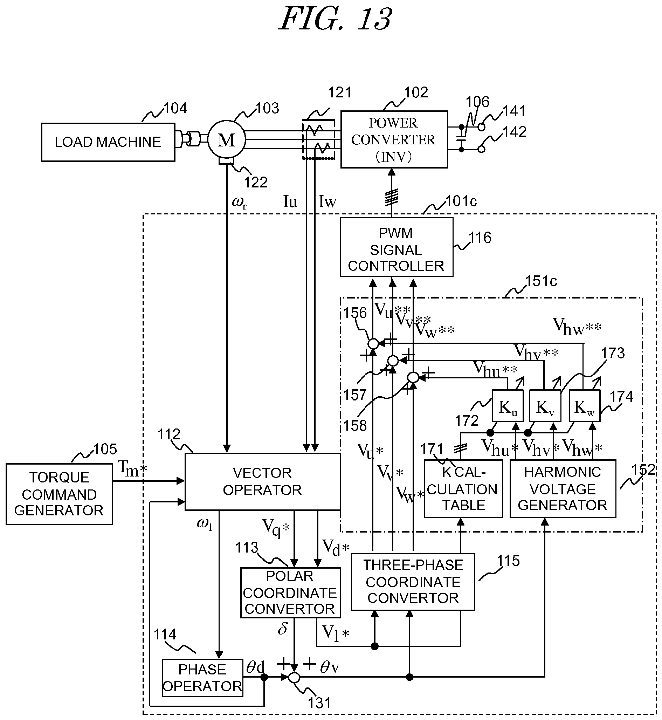

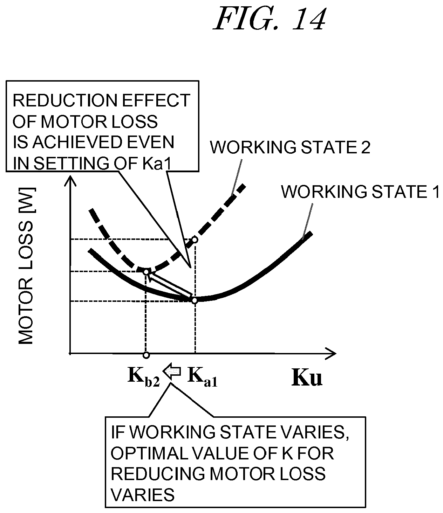

Next, the sixth embodiment of the present invention will be described with reference to Figs. 13 and 14.

Fig. 13 is a configuration diagram of an AC motor driving system according to the sixth embodiment of the present invention.

Only different configuration portions will be described as compared with the second embodiment shown in Fig. 6. In Fig. 13, this motor loss reducing means 151c is used instead of the motor loss reducing means 151 of Fig. 6, thereby realizing the sixth embodiment. The motor loss reducing means 151c includes the harmonic voltage generator 152, a proportional coefficient K calculation table machine 171, an amplitude adjuster 172 of the U phase added harmonic voltage component Vhu*, an amplitude adjuster 173 of the V phase added harmonic voltage component Vhv*, an amplitude adjuster 174 of the W phase added harmonic voltage component Vhw*, the adder 156, the adder 157, and the adder 158.

In the present application, the terms Vhu*, Vhv* and Vhw* may represent the harmonic voltage components at a specific frequency, or may represent a set of voltages corresponding to the different phases but at different frequencies.

In the motor loss reducing means 151 according to the second embodiment of Fig. 6, the proportional coefficients Ku, Kv and Kw of the respective amplitude adjusters of the U phase, V phase and W phase added harmonic voltages are setting values (fixed values) for reducing motor loss, whereas, in the present embodiment of Fig. 13, the proportional coefficient Ku of the amplitude adjuster 172 of the U phase added harmonic voltage, the proportional coefficient Kv of the amplitude adjuster 173 of the V phase added harmonic voltage, and the proportional coefficient Kw of the amplitude adjuster 174 of the W phase added harmonic voltage are changed depending on the voltage amplitude command V1*.

The proportional coefficient K calculation table machine 171 outputs values of the proportional coefficients Ku, Kv and Kw in response to the voltage amplitude command V1*. The proportional coefficients Ku, Kv and Kw are set as table data by calculating values which are very suitable to reduce motor loss in advance through a test using a practical machine, analysis simulation, or the like.

Fig. 14 is a graph illustrating a relationship between a setting value of the proportional coefficient Ku (or Kv, or Kw) of a voltage component different from the fundamental wave voltage and motor loss in a different working state of the AC motor driving system. In Fig. 14, when a working state is changed from a working state 1 to a working state 2, an optimal value of the proportional coefficient Ku for reducing motor loss is changed from Ka1 to Kb2. In the working state 2, although an effect of reducing motor loss can be achieved even in a state where the proportional coefficient Ku is set to Ka1, Ku is changed to Kb2, and thereby it is possible to realize further reduction in motor loss. In addition, in the AC motor driving system of the sixth embodiment, the variation from the working state 1 to the working state 2 is caused by, for example, a variation in a modulation ratio of the PWM signals, a variation in a driving frequency of the AC motor, a variation in a DC voltage of the power converter, and a variation in a load of the AC motor.

As described above, according to the present embodiment, the amplitude of the harmonic voltage added to the fundamental wave voltage command is changed depending on the voltage amplitude command V1*, and thereby it is possible to realize improvement in the motor loss reduction effect according to a working operation state. In addition, the sixth embodiment can be carried out by providing a table machine for changing a proportional coefficient of each amplitude adjuster depending on the voltage amplitude command V1* in the same manner for the cases of the third embodiment, the fourth embodiment, and the fifth embodiment.

### Seventh Embodiment

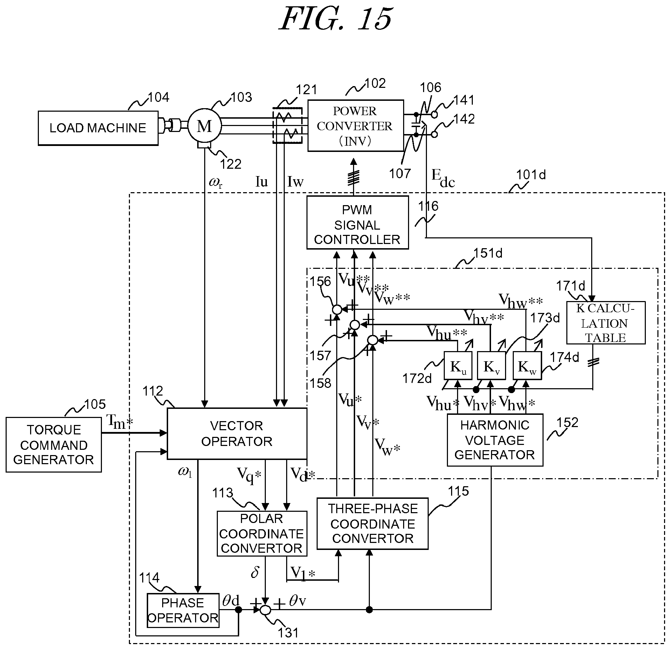

Next, the seventh embodiment of the present invention will be described with reference to Fig. 15.

Fig. 15 is a configuration diagram of an AC motor driving system according to the seventh embodiment of the present invention. Only different configuration portions will be described as compared with the second embodiment shown in Fig. 6. In Fig. 15, a motor loss reducing means 151d

is used instead of the motor loss reducing means 151 of Fig. 6, and a means 107 for detecting a DC voltage Edc is provided, thereby realizing the seventh embodiment. The motor loss reducing means 151d includes the harmonic voltage generator 152, a proportional coefficient K calculation table machine 171d, an amplitude adjuster 172d of the U phase added harmonic voltage component Vhu*, an amplitude adjuster 173d of the V phase added harmonic voltage component Vhv*, an amplitude adjuster 174d of the W phase added harmonic voltage component Vhw*, the adder 156, the adder 157, and the adder 158.

In the present embodiment of Fig. 15, the proportional coefficient Ku of the amplitude adjuster 172d of the U phase added harmonic voltage, the proportional coefficient Kv of the amplitude adjuster 173d of the V phase added harmonic voltage, and the proportional coefficient Kw of the amplitude adjuster 174d of the W phase added harmonic voltage are changed depending on the DC voltage detection value Edc.

The proportional coefficient K calculation table machine 171d outputs values of the proportional coefficients Ku, Kv and Kw according to the DC voltage detection value Edc. The proportional coefficients Ku, Kv and Kw are set as table data by calculating values which are very suitable to reduce motor loss in advance through a test using a practical machine, analysis simulation, or the like according to the DC voltage detection value Edc.

As described above, according to the present embodiment, the amplitude of the harmonic voltage added to the fundamental wave voltage command is changed depending on the DC voltage detection value Edc, and thereby it is possible to realize improvement in the motor loss reduction effect according to a variation in a DC voltage of the power converter. In addition, the seventh embodiment can be carried out by providing a table machine for changing a proportional coefficient of each amplitude adjuster depending on the DC voltage detection value Edc in the same manner for the cases of the third embodiment, the fourth embodiment, and the fifth embodiment.

### Eighth Embodiment

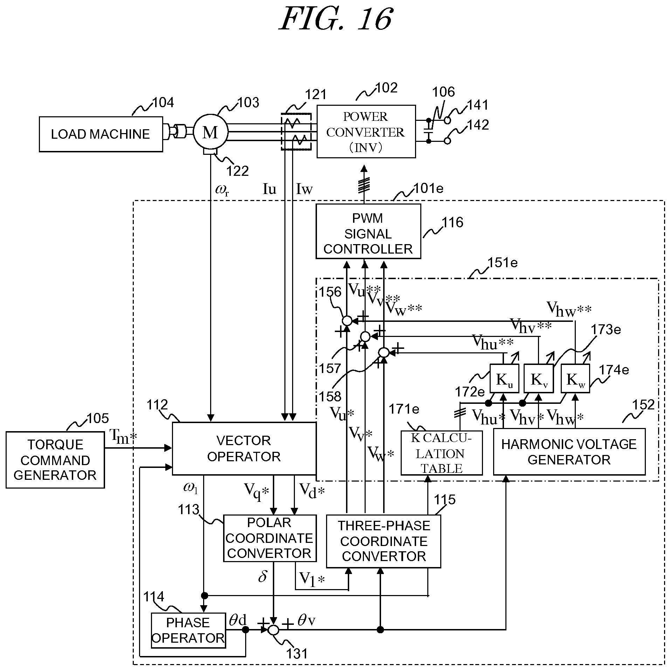

Next, the eighth embodiment of the present invention will be described with reference to Fig. 16.

Fig. 16 is a configuration diagram of an AC motor driving system according to the eighth embodiment of the present invention. Only different configuration portions will be described as compared with the second embodiment shown in Fig. 6. In Fig. 16, a motor loss reducing means 151e
is used instead of the motor loss reducing means 151 of Fig. 6, thereby realizing the eighth embodiment. The motor loss reducing means 151e includes the harmonic voltage generator 152, a proportional coefficient K calculation table machine 171e, an amplitude adjuster 172e of the U phase added harmonic voltage component Vhu*, an amplitude adjuster 173e of the V phase added harmonic voltage component Vhv*, an amplitude adjuster 174e of the W phase added harmonic voltage component Vhw*, the adder 156, the adder 157, and the adder 158.

In the present embodiment of Fig. 16, the proportional coefficient Ku of the amplitude adjuster 172e of the U phase added harmonic voltage, the proportional coefficient Kv of the amplitude adjuster 173e of the V phase added harmonic voltage, and the proportional coefficient Kw of the amplitude adjuster 174e of the W phase added harmonic voltage are changed depending on a driving frequency ω1 of the AC motor which is an output of the vector operator 112.

The proportional coefficient K calculation table machine 171e outputs values of the proportional coefficients Ku, Kv and Kw according to the driving frequency ω1 of the AC motor which is an output of the vector operator 112. The proportional coefficients Ku, Kv and Kw are set as table data by calculating values which are very suitable to reduce motor loss in advance through a test using a practical machine, analysis simulation, or the like according to the driving frequency of the AC motor.

As described above, according to the present embodiment, the amplitude of the harmonic voltage added to the fundamental wave voltage command is changed depending on the driving frequency ω1 of the AC motor which is an output of the vector operator 112, and thereby it is possible to realize improvement in the motor loss reduction effect according to a variation in a driving frequency of the AC motor. In addition, the eighth embodiment can be carried out by providing a table machine for changing a proportional coefficient of each amplitude adjuster depending on the driving frequency of the AC motor in the same manner for the cases of the third embodiment, the fourth embodiment, and the fifth embodiment.

### Ninth Embodiment

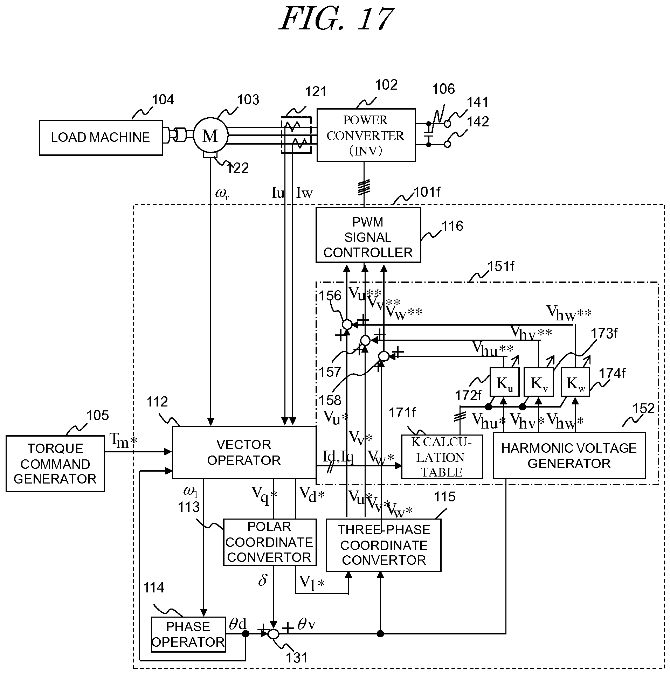

Next, the ninth embodiment of the present invention will be described with reference to Fig. 17.

Fig. 17 is a configuration diagram of an AC motor driving system according to the ninth embodiment of the present invention. Only different configuration portions will be described as compared with the second embodiment shown in Fig. 6. In Fig. 17, a motor loss reducing means 151f is used instead of the motor loss reducing means 151 of Fig. 6, thereby realizing the ninth embodiment. The motor loss reducing means 151f includes the harmonic voltage generator 152, a proportional coefficient K calculation table machine 171f, an amplitude adjuster 172f of the U phase added harmonic voltage component Vhu*, an amplitude adjuster 173f of the V phase added harmonic voltage component Vhv*, an amplitude adjuster 174f of the W phase added harmonic voltage component Vhw*, the adder 156, the adder 157, and the adder 158.

In the present embodiment of Fig. 17, the proportional coefficient Ku of the amplitude adjuster 172f of the U phase added harmonic voltage, the proportional coefficient Kv of the amplitude adjuster 173f of the V phase added harmonic voltage, and the proportional coefficient Kw of the amplitude adjuster 174f of the W phase added harmonic voltage are changed depending on a torque current component (a q-axis current component) Iq and an excitation current component (a d-axis current component) Id into which the AC current detection values Iu and Iw are divided on the basis of the control phase θd from the vector operator 112.

The proportional coefficient K calculation table machine 171f outputs values of the proportional coefficients Ku, Kv and Kw according to the torque current component Iq and the excitation current component Id. The proportional coefficients Ku, Kv and Kw are set as table data by calculating values which are very suitable to reduce motor loss in advance through a test using a practical machine, analysis simulation, or the like according to the torque current component Iq and the excitation current component Id.

As described above, according to the present embodiment, the amplitude of the harmonic voltage added to the fundamental wave voltage command is changed depending on the torque current component Iq and the excitation current component Id of the AC motor, and thereby it is possible to realize improvement in the motor loss reduction effect according to a variation in a load of the AC motor. In addition, the ninth embodiment can be carried out by providing a table machine for changing a proportional coefficient of each amplitude adjuster depending on the torque current component Iq and the excitation current component Id in the same manner for the cases of the third embodiment, the fourth embodiment, and the fifth embodiment.

In addition, although, in the present embodiment, the K calculation table corresponding to the torque current component Iq and the excitation current component Id flowing through the AC motor is used, it is possible to realize improvement in the same motor loss reduction effect even in a case of using a K calculation table corresponding to a torque current command Iq* and a excitation current command Id* which are used for a current control operation of the vector operator 112.

### Tenth Embodiment

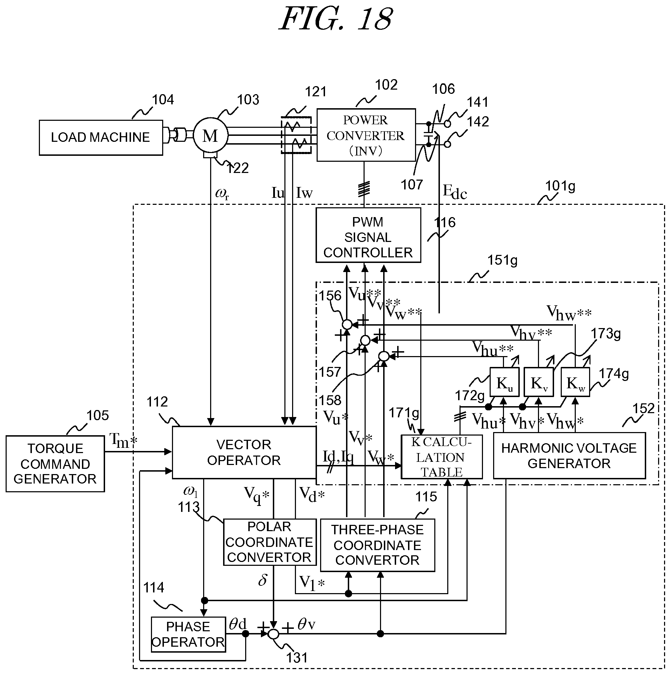

Next, the tenth embodiment of the present invention will be described with reference to Fig. 18.

Fig. 18 is a configuration diagram of an AC motor driving system according to the tenth embodiment of the present invention. Only different configuration portions will be described as compared with the second embodiment shown in Fig. 6. In Fig. 18, a motor loss reducing means 151g is used instead of the motor loss reducing means 151 of Fig. 6, and the means 107 for detecting the DC voltage Edc is provided, thereby realizing the tenth embodiment. The motor loss reducing means 151g includes the harmonic voltage generator 152, a proportional coefficient K calculation table machine 171g, an amplitude adjuster 172g of the U phase added harmonic voltage component Vhu*, an amplitude adjuster 173g of the V phase added harmonic voltage component Vhv*, an amplitude adjuster 174g of the W phase added harmonic voltage component Vhw*, the adder 156, the adder 157, and the adder 158.

In the present embodiment of Fig. 18, the proportional coefficient Ku of the amplitude adjuster 172g of the U phase added harmonic voltage, the proportional coefficient Kv of the amplitude adjuster 173g of the V phase added harmonic voltage, and the proportional coefficient Kw of the amplitude adjuster 174g of the W phase added harmonic voltage are changed depending on a plurality of parameters such as the voltage amplitude command V1*, the DC voltage detection value Edc, the driving frequency ω1 of the AC motor, the torque current component Iq, and the excitation current component Id.

The proportional coefficient K calculation table machine 171g outputs values of the proportional coefficients Ku, Kv and Kw according to a plurality of parameters such as the voltage amplitude command V1*, the DC voltage detection value Edc, the driving frequency ω1 of the AC motor, the torque current component Iq, and the excitation current component Id. The proportional coefficients Ku, Kv and Kw are set as table data by calculating values which are very suitable to reduce motor loss in advance through a test using a practical machine, analysis simulation, or the like according to a plurality of parameters such as the voltage amplitude command V1*, the DC voltage detection value Edc, the driving frequency ω1 of the AC motor, the torque current component Iq, and the excitation current component Id.

As described above, according to the present embodiment, the amplitude of the harmonic voltage added to the fundamental wave voltage command is changed depending on a plurality of parameters such as the voltage amplitude command V1*, the DC voltage detection value Edc, the driving frequency ω1 of the AC motor, the torque current component Iq, and the excitation current component Id, and thereby it is possible to set a very suitable addition amount according to various working states such as a load state of the AC motor driving system or a DC voltage of the power converter and to thereby realize further improvement in the motor loss reduction effect. In addition, the tenth embodiment can be carried out by providing a table machine for changing a proportional coefficient of each amplitude adjuster depending on a plurality of parameters such as the voltage amplitude command V1*, the DC voltage detection value Edc, the driving frequency ω1 of the AC motor, the torque current component Iq, and the excitation current component Id in the same manner for the cases of the third embodiment, the fourth embodiment, and the fifth embodiment.

### Eleventh Embodiment

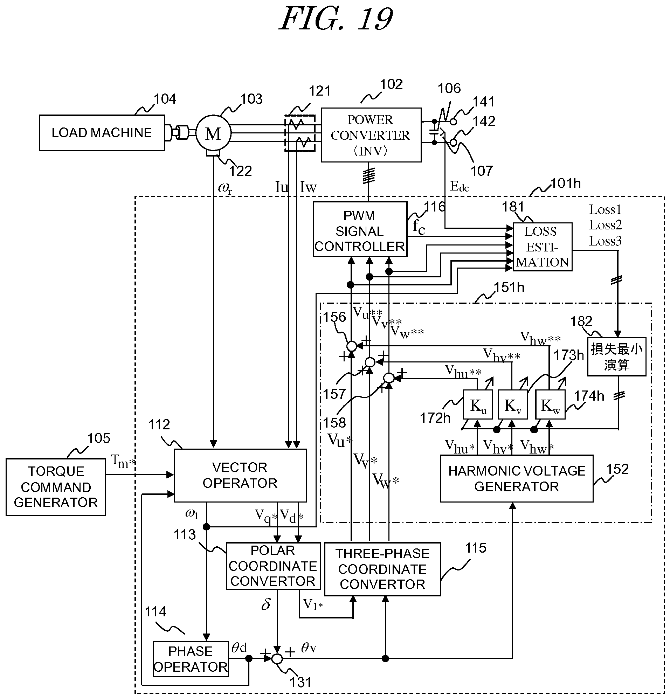

Next, the eleventh embodiment of the present invention will be described with reference to Figs. 19, 20, 21 and 22.

The driving systems according to the second to tenth embodiments are systems in which the proportional coefficients Ku, Kv and Kw of harmonic voltages added to the three-phase AC voltage commands are changed to setting values which are very suitable to reduce motor loss, depending on a load state of the AC motor or in consideration of a DC voltage value of the inverter, and thereby it is possible to maximize working efficiency of the motor. Among them, to determine an addition amount of the harmonic voltage depends on accuracy or a resolution of a table since values are computed in advance and are set as a data table.

In the present embodiment, loss calculation is performed in real time, and thus AC motor driving is realized at a harmonic voltage addition amount which is the optimum at all times.

Fig. 19 is a configuration diagram of an AC motor driving system according to the eleventh embodiment of the present invention. Only different configuration portions will be described as compared with the second embodiment shown in Fig. 6. In Fig. 19, a control device 101h includes a loss estimation operator 181, a motor loss reducing means 151h is used instead of the motor loss reducing means 151 of Fig. 6, and the means 107 for detecting the DC voltage Edc is provided, thereby realizing the eleventh embodiment. The motor loss reducing means 151h includes the harmonic voltage generator 152, a minimum loss operator 182, an amplitude adjuster 172h of the U phase added harmonic voltage component Vhu*, an amplitude adjuster 173h of the V phase added harmonic voltage component Vhv*, an amplitude adjuster 174h of the W phase added harmonic voltage component Vhw*, the adder 156, the adder 157, and the adder 158.

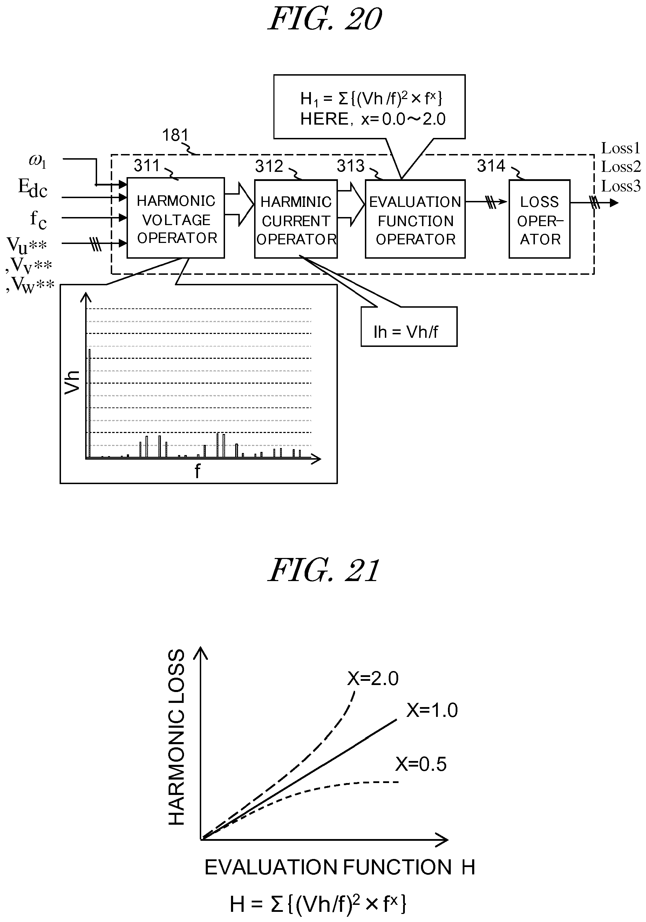

Fig. 20 is a block configuration diagram of the loss estimation operator 181 according to the eleventh embodiment of the present invention. The loss estimation operator 181 includes a harmonic voltage operator 311, a harmonic current operator 312, an evaluation function operator 313, and a loss operator 314, and operates a loss of the AC motor on the basis of the DC voltage detection value Edc of the power converter, the PWM Carrier frequency fc, the driving frequency ω1 of the AC motor, and the three-phase AC voltage commands Vu**, Vv** and Vw**.

The configuration diagram of Fig. 20 will be described more in detail.

In Fig. 20, the loss estimation operator 181 receives the DC voltage detection value Edc, the PWM Carrier frequency fc, the driving frequency ω1 of the AC motor, and the three-phase AC voltage commands Vu**, Vv** and Vw**, and is constituted by the harmonic voltage operator 311 which computes a harmonic voltage component, the harmonic current operator 312 which computes a harmonic current from the harmonic voltage component, the evaluation function operator 313 which operates an evaluation function corresponding to a harmonic loss from the harmonic current value, and the loss operator 314 which computes a harmonic loss on the basis of this evaluation function value. The harmonic voltage operator 311 performs an operation such as frequency analysis on the basis of the three-phase AC voltage commands Vu**, Vv** and Vw** so as to obtain a harmonic voltage component Vh included in each frequency. In addition, the harmonic current operator 312 computes a current-corresponding value Ih (= Vh / f) of each harmonic component by dividing the harmonic voltage by a frequency of the voltage. In addition, a current value may be roughly computed using harmonic frequencies and inductance values; however, dividing a voltage by a frequency also has no problem in performing loss evaluation. Next, the evaluation function operator 313 operates an evaluation function having correlation with a harmonic loss from the harmonic current-corresponding value Ih.

The evaluation function operated here is an amount corresponding to a harmonic loss of the AC motor. For example, a secondary copper loss of an induction motor corresponds to the square of a current × R with respect to secondary resistance R. However, the harmonic loss is said to be a multiple of the x-th power of a harmonic frequency due to influence of the skin effect of a secondary coil. In addition, (x = 0) indicates that the secondary resistance has no frequency dependency, and there is such a case depending on a rotor structure. In addition, when the skin effect is great, values of (x = about 0.5 to 2) are taken. This depends on characteristics of a motor, and thus if the motor is changed, a value of x naturally varies, but it is confirmed that x is around 1 from a test using a practical machine.

In the embodiment shown in Fig. 20, the current component Ih (= Vh / f) of the harmonic frequency f is squared and is further multiplied by the x-th power of f as a weight, a sum of all operation values obtained by performing this operation on each harmonic frequency component is set as an evaluation function H1. In addition, the same computation is performed, thereby calculating evaluation functions H2 and H3 of the harmonic loss of the other two phases of the three phases.

Fig. 21 shows a relationship between the values of x and the harmonic loss. For example, in a case where x = 1.0 (that is, the weight is f) is set in a certain AC motor, it is confirmed that the harmonic loss and the evaluation function are in a linear relationship. As above, by introducing the evaluation function, an operation of a harmonic loss is easily performed. The loss operator 314 obtains a loss Loss1 since a value of the evaluation function H1 is a coefficient multiple. In relation to the coefficient, a relationship with a loss may be obtained in advance through one practical measurement.

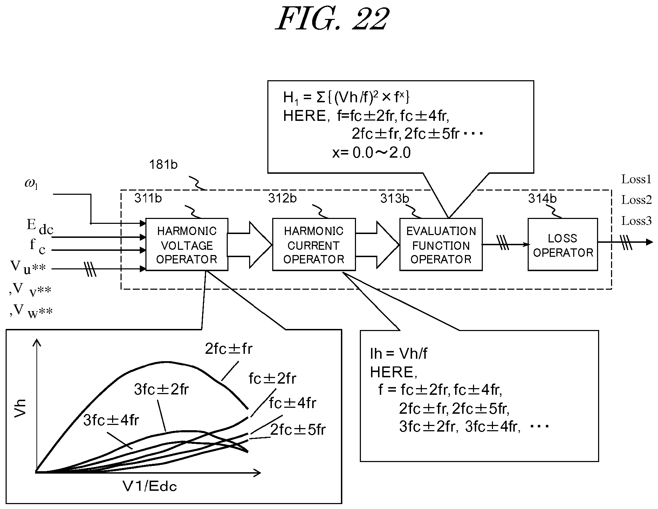

In addition, as shown in Fig. 22, the harmonic voltage operator 311 may generate, as a table, a ratio of containing each harmonic frequency corresponding to a ratio (V1/Edc) of the voltage amplitude command V1* operated from the three-phase AC voltage commands Vu**, Vv** and Vw** and the DC voltage detection value Edc, for each ratio (fc/f1) of the PWM Carrier frequency fc and the driving frequency ω1 (2*π·*f1) of the AC motor, whereby a voltage component of each harmonic frequency can be obtained such that, for example, how many volts of a harmonic voltage component of (fc ± 2·fr) is included, and the magnitude Vh of a harmonic voltage for each frequency can be output.

Next, the loss minimizing means of the present embodiment will be described.

The minimum loss operator 182 of Fig. 19 increases or decreases the proportional coefficient Ku of the amplitude adjuster 172h of the U phase added harmonic voltage such that the loss Loss1 due to a U phase harmonic current is the minimum. Similarly, the minimum loss operator 182 increases or decreases the proportional coefficient Kv of the amplitude adjuster 173h of the V phase added harmonic voltage such that a loss Loss2 due to a V phase harmonic current is the minimum, and increases or decreases the proportional coefficient Kw of the amplitude adjuster 174h of the W phase added harmonic voltage such that a loss Loss3 due to a W phase harmonic current is the minimum. In addition, at least one of the Loss1 to the Loss3 may be computed, and the proportional coefficients Ku, Kv and Kw may be controlled so as to be set to the same value and to minimize motor loss.

As described above, according to the present embodiment, since a loss operation can be performed at all times according to a working state of the AC motor and a DC voltage value of the inverter, efficient maximum driving can be performed in real time. Therefore, it is possible to increase efficiency of the motor driving system. In addition, by introducing an evaluation function, it is possible to operate a loss with higher accuracy, and to thereby realize a high efficiency AC motor driving system with a simpler configuration.

### Twelfth Embodiment

Next, the twelfth embodiment of the present invention will be described.

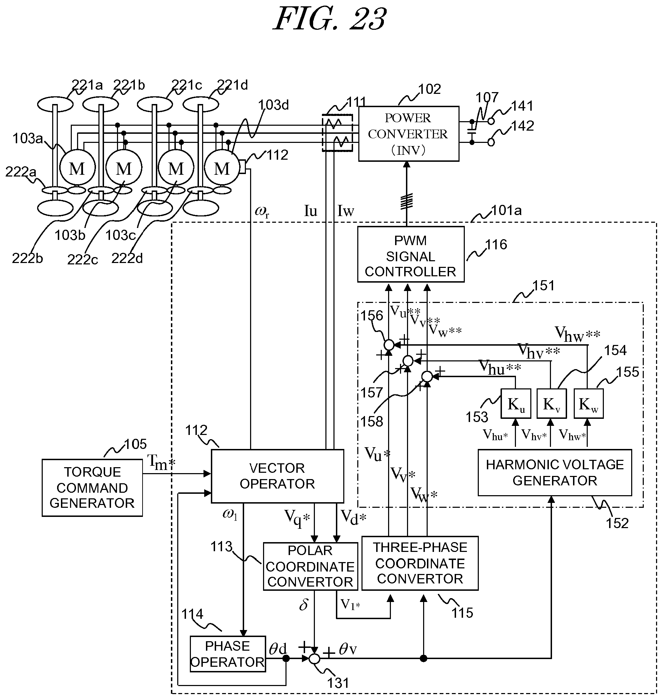

A specific configuration example of the AC motor driving system of the twelfth embodiment is shown in Fig. 23.

Fig. 23 shows an example in which the AC motor driving system according to the second embodiment is applied to a railway vehicle. In the railway vehicle, the capacity of a motor is 100 kW or more and is thus great, and a carrier frequency cannot be set to be high. Further, if high efficiency motor control is to be performed, there is a limitation in the PWM control method in the related art. By applying the twelfth embodiment, it is possible to realize a railway vehicle system capable of performing energy saving driving of the AC motor without increasing a carrier frequency and also increasing a loss of the power converter. In addition, the twelfth embodiment is also applicable to a case where the AC motor driving systems according to the above-described other embodiments are mounted therein, and it is possible to realize a railway vehicle system capable of performing energy saving driving of the AC motor.

As above, the embodiments of the present invention have been described. The present invention is applicable to other motors as long as they are AC motors. For example, the present invention is also applicable to a permanent magnet synchronous motor, a wound type synchronous motor, and a synchronous motor using a reactance torque in the same manner.

## Claims

1. A motor driving system comprising:
an AC motor (103);
a PWM signal control unit (116) that performs a pulse width modulation on three-phase voltage command signals with a carrier signal;
a power converter (102) that is driven by a gate signal having undergone the pulse width modulation; and
a command voltage creating means (101) for generating the three-phase voltage command signals for driving the AC motor (103),
**characterized in that** the command voltage creating means (101) includes means (151) for adding a respective voltage component different from a fundamental wave voltage command to each of the three-phase voltage command signals and reducing a loss of the AC motor (103) by using an addition amount of the respective voltage component different from the fundamental wave voltage command;
wherein the command voltage creating means (101) sets the respective voltage component different from the fundamental wave voltage command by:
generating voltage components of frequencies which are integer multiples of a frequency of the fundamental wave voltage command,
multiplying the generated voltage components by respective proportional coefficients (K₁-Kₙ), and
setting the sum total thereof as the respective voltage component different from the fundamental wave voltage command.

2. The motor driving system according to claim 1, wherein the command voltage creating means (101) includes means for controlling an addition amount of the respective voltage component different from the fundamental wave voltage command on the basis of at least one of the fundamental wave voltage command, a DC voltage detection value of the power converter (102), a detection value of a current flowing through the AC motor (103), and a driving frequency of the AC motor (103).

3. The motor driving system according to claim 1, wherein the means for reducing a loss of the AC motor (103) includes means for operating a loss occurring in the AC motor (103), and changes an addition amount of the voltage component different from the fundamental wave voltage command on the basis of an operation value of the loss so as to drive the AC motor (103).

4. The motor driving system according to claim 3, wherein the means for operating a loss occurring in the AC motor (103) includes means for operating a harmonic voltage component Vh from the three-phase voltage command signals, and operating Vh / f obtained by dividing the harmonic voltage component Vh by a frequency f of the harmonic voltage component Vh as a harmonic current component Ih.

5. The motor driving system according to claim 3, wherein, when a harmonic current component is Ih, and a frequency of the harmonic current component is f, the means for operating a loss occurring in the AC motor (103) operates Ih²·f^{x} by multiplying the square of the harmonic current component Ih by the x-th power of the frequency f, uses a sum total of results obtained by operating Ih²·f^{x} for at least one or more harmonic current components as an evaluation index, and obtains a loss occurring in the AC motor (103) on the basis of the evaluation index.

6. The motor driving system according to claim 4, wherein, when a harmonic current component is Ih, and a frequency of the harmonic current component is f, Ih²·f^{x} is obtained by multiplying the square of the harmonic current component Ih by the x-th power of the frequency f, and the exponential x of f varies in a range of 0 to 2 depending on characteristics of the AC motor (103).

7. A motor vehicle comprising the motor driving system according to any one of claims 1 to 6.

## Patentansprüche

1. Motorantriebssystem, umfassend:
einen Wechselstrommotor (130);
eine PWM-Signalsteuereinheit (116), die eine Pulsbreitenmodulation an Dreiphasenspannungsbefehlssignalen mit einem Trägersignal ausführt;
einen Leistungswandler (102), der durch ein Gate-Signal angesteuert wird, das eine Pulsbreitenmodulation durchlaufen hat; und
ein Befehlsspannungserzeugungsmittel (101) zum Erzeugen der Dreiphasenspannungsbefehlssignale zum Antreiben des Wechselstrommotors (103);
**dadurch gekennzeichnet, dass** das Befehlsspannungserzeugungsmittel (101) Mittel (151) zum Addieren einer entsprechenden Spannungskomponente, die sich von einem Grundwellenspannungsbefehl unterscheidet, zu jedem der Dreiphasenspannungsbefehlssignale und das Reduzieren eines Verlusts des Wechselstrommotors (103) durch Verwendung eines Additionsausmaßes der entsprechenden Spannungskomponente, die sich vom Grundwellenspannungsbefehl unterscheidet, umfasst;
wobei das Befehlsspannungserzeugungsmittel (101) die entsprechende Spannungskomponente durch Folgendes unterschiedlich vom Grundwellenspannungsbefehl einstellt:
Erzeugen von Spannungskomponenten mit Frequenzen, die ganzzahlige Vielfache der Frequenz des Grundwellenspannungsbefehls sind;
Multiplizieren der erzeugten Spannungskomponenten durch entsprechende proportionale Koeffizienten (K₁-Kₙ) und
Einstellen der Gesamtsumme davon als die entsprechende Spannungskomponente, die sich vom Grundwellenspannungsbefehl unterscheidet.

2. Motorantriebssystem nach Anspruch 1, wobei das Befehlsspannungserzeugungsmittel (101) Mittel zur Steuerung eines Additionsausmaßes der entsprechenden Spannungskomponente, die sich vom Grundwellenspannungsbefehl unterscheidet, basierend auf zumindest einem Grundwellenspannungsbefehl, einem Gleichspannungsdetektionswert des Leistungswandlers (102), einem Detektionswert eines Stroms, der durch den Wechselstrommotor (103) fließt, und einer Ansteuerfrequenz des Wechselstrommotors (103).

3. Motorantriebssystem nach Anspruch 1, wobei das Mittel zum Reduzieren eines Verlusts des Wechselstrommotors (103) Mittel zur Handhabung eines Verlusts, der im Wechselstrommotor (103) auftritt, umfasst und ein Additionsausmaß der Spannungskomponente, die sich vom Grundwellenspannungsbefehl unterscheidet, basierend auf einem Handhabungswert des Verlusts ändert, um so den Wechselstrommotor (103) anzutreiben.

4. Motorantriebssystem nach Anspruch 3, wobei die Mittel zur Handhabung eines Verlusts, der im Wechselstrommotor (103) auftritt, Mittel zum Anwenden einer Oberwellenspannungskomponente Vh von den Dreiphasenspannungsbefehlssignalen und zum Anwenden von Vh/f, erhalten durch Dividieren der Oberwellenspannungskomponente Vh durch eine Frequenz f der Oberwellenspannungskomponente Vh, als eine Oberschwingungsstromkomponente Ih.

5. Motorantriebssystem nach Anspruch 3, wobei, wenn eine Oberschwingungsstromkomponente Ih ist und eine Frequenz der Oberschwingungsstromkomponente f ist, das Mittel zur Handhabung eines Verlusts, der im Wechselstrommotor (103) auftritt, Ih²·f^{x} durch Multiplizieren des Quadrats der Oberschwingungsstromkomponente Ih mit der x-ten Potenz der Frequenz f anwendet, eine Gesamtsumme von Resultaten der Anwendung von Ih²·f^{x} für zumindest eine oder mehrere Oberschwingungsstromkomponenten als einen Evaluationsindex verwendet und einen Verlust, der im Wechselstrommotor (103) auftritt, basierend auf dem Evaluationsindex erhält.

6. Motorantriebssystem nach Anspruch 4, wobei, wenn eine Oberschwingungsstromkomponente Ih ist und eine Frequenz der Oberschwingungsstromkomponenten f ist, Ih²·f^{x} durch Multiplizieren des Quadrats der Oberschwingungsstromkomponente Ih mit der x-ten Potenz der Frequenz f erhalten wird und der Exponent x von f abhängig von der Charakteristik des Wechselstrommotors (103) im Bereich von 0 bis 2 variiert.

7. Motorfahrzeug, das ein Motorantriebssystem nach einem der Ansprüche 1 bis 6 umfasst.

## Revendications

1. Système d'entraînement de moteur comprenant :
un moteur à courant alternatif, CA, (103) ;
une unité de commande de signal PWM (116) qui effectue une modulation de largeur d'impulsion sur des signaux de commande de tension triphasée avec un signal de porteuse ;
un convertisseur de puissance (102) qui est entraîné par un signal de grille ayant subi la modulation de largeur d'impulsion ; et
un moyen de création de tension de commande (101) pour générer les signaux de commande de tension triphasée afin d'entraîner le moteur CA (103),
**caractérisé en ce que** le moyen de création de tension de commande (101) inclut un moyen (151) pour ajouter une composante de tension respective différente d'une commande de tension d'onde fondamentale à chacun des signaux de commande de tension triphasée et pour réduire une perte du moteur CA (103) en utilisant une quantité d'addition de la composante de tension respective différente de la commande de tension d'onde fondamentale ;
dans lequel le moyen de création de tension de commande (101) définit la composante de tension respective différente de la commande de tension d'onde fondamentale par l'intermédiaire des étapes consistant à :
générer des composantes de tension de fréquences qui sont des multiples entiers d'une fréquence de la commande de tension d'onde fondamentale,
multiplier les composantes de tension générées par des coefficients proportionnels respectifs (K₁-Kₙ), et
définir la somme totale de celles-ci en tant que composante de tension respective différente de la commande de tension d'onde fondamentale.

2. Système d'entraînement de moteur selon la revendication 1, dans lequel le moyen de création de tension de commande (101) inclut un moyen pour commander une quantité d'addition de la composante de tension respective différente de la commande de tension d'onde fondamentale sur la base d'au moins l'une de la commande de tension d'onde fondamentale, d'une valeur de détection de tension de courant continu, CC, du convertisseur de puissance (102), d'une valeur de détection d'un courant circulant dans le moteur CA (103), et d'une fréquence d'entraînement du moteur CA (103) .

3. Système d'entraînement de moteur selon la revendication 1, dans lequel le moyen pour réduire une perte du moteur CA (103) inclut un moyen pour faire fonctionner une perte se produisant dans le moteur CA (103), et change une quantité d'addition de la composante de tension différente de la commande de tension d'onde fondamentale sur la base d'une valeur de fonctionnement de la perte de manière à entraîner le moteur CA (103).

4. Système d'entraînement de moteur selon la revendication 3, dans lequel le moyen pour faire fonctionner une perte survenant dans le moteur CA (103) incluent des moyens pour faire fonctionner une composante de tension harmonique Vh à partir des signaux de commande de tension triphasée, et faire fonctionner Vh/f obtenu en divisant la composante de tension harmonique Vh par une fréquence f de la composante de tension harmonique Vh en tant que composante de courant harmonique Ih.

5. Système d'entraînement de moteur selon la revendication 3, dans lequel, lorsqu'une composante de courant harmonique est Ih, et une fréquence de la composante de courant harmonique est f, le moyen pour faire fonctionner une perte survenant dans le moteur CA (103) fait fonctionner Ih²•f^{x} en multipliant le carré de la composante de courant harmonique Ih par la x-ième puissance de la fréquence f, utilise une somme totale de résultats obtenus en faisant fonctionner Ih²•f^{x} pour au moins une ou plusieurs composantes de courant harmonique en tant qu'indice d'évaluation, et obtient une perte survenant dans le moteur CA (103) sur la base de l'indice d'évaluation.

6. Système d'entraînement de moteur selon la revendication 4, dans lequel, lorsqu'une composante de courant harmonique est Ih, et une fréquence de la composante de courant harmonique est f, Ih²•f^{x} est obtenu en multipliant le carré de la composante de courant harmonique Ih par la x-ième puissance de la fréquence f, et l'exposant x de f varie dans une plage de 0 à 2 en fonction des caractéristiques du moteur CA (103).

7. Véhicule à moteur comprenant le système d'entraînement de moteur selon l'une quelconque des revendications 1 à 6.
